(19) Europäisches Patentamt
European Patent Office
Office européen des brevets

(11) **EP 2 020 772 B1**

## (12) FASCICULE DE BREVET EUROPEEN

(45) Date de publication et mention
de la délivrance du brevet:
**29.09.2010 Bulletin 2010/39**

(21) Numéro de dépôt: **08305437.9**

(22) Date de dépôt: **30.07.2008**

(51) Int Cl.:
*H04J 14/02* (2006.01)     *H04B 10/08* (2006.01)

(54) **Estimation de la qualité d'une transmission dans un système photonique**

Schätzung der Qualität einer Übertragung in einem optischen System

Estimation of the quality of a transmission in a photonic system

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **31.07.2007 FR 0756820**

(43) Date de publication de la demande:
**04.02.2009 Bulletin 2009/06**

(73) Titulaire: **Alcatel Lucent
75008 Paris (FR)**

(72) Inventeurs:
• **Zami, Thierry
91300, Massy (FR)**
• **Morea, Annalisa
75014, Paris (FR)**
• **Brogard, Nicolas
91120, Montrouge (FR)**

(74) Mandataire: **Shamsaei Far, Hassan
Alcatel Lucent
Bâtiment Bourgognes
32 Avenue Kléber
92707 Colombes Cedex (FR)**

(56) Documents cités:
**EP-A- 0 874 477     US-A1- 2003 115 028**

**Description**

L'invention se rapporte au domaine de la prédiction et du contrôle de la qualité des transmissions dans les systèmes de transmission photoniques.

Dans les débuts des réseaux de communication optiques utilisant le multiplexage en longueurs d'ondes (WDM), les signaux optiques étaient régénérés, c'est-à-dire convertis dans le domaine électronique, au niveau de chaque noeud. On appellera connexion photonique un canal capable de transporter des données intégralement dans le domaine optique entre deux points d'un système de transmission. Une connexion photonique est caractérisée notamment par au moins un canal de longueur d'onde et un chemin suivi par ce canal de longueur d'onde. Dans un tel réseau WDM, un signal ne reste dans le domaine optique que pour aller d'un noeud au noeud suivant dans un lien optique. Le multiplex de canaux transporté reste donc inchangé d'un bout à l'autre de la connexion photonique.

EP-A-0 874 477 décrit un simulateur de qualité de transmission qui opère sur la base de paramètres d'éléments optiques mesurés et sert à une optimisation de cette qualité par commande de ces éléments.

US-A-2003 115028 décrit un procédé d'estimation de la qualité d'un signal par simulation sur ordinateur. Ce procédé utilise une modélisation du bruit auquel est soumis le signal.

Avec l'avènement de techniques de commutation dans le domaine photonique, notamment des techniques de commutation de longueurs d'ondes, des réseaux tout-optiques ou réseaux transparents sont apparus. Une présentation de diverses architectures de réseaux tout-optiques peut être trouvée dans « Architectural Tradeoffs for Reconfigurable Dense Wavelength-Division Multiplexing Systems », E.B. Basch et al., JSTQE, Vol. 12, No 4 (2006). L'accroissement de la distance de propagation du signal optique sans régénération donne une importance accrue aux distorsions d'origine physique. Pour sélectionner un chemin pour une nouvelle connexion photonique dans un tel réseau, il est donc nécessaire de prendre en compte les distorsions d'origine physique qui sont susceptibles d'affecter sa qualité ou sa faisabilité. Toutefois, les effets physiques et leurs interactions sont complexes.

Il existe donc un besoin pour des méthodes et dispositifs capables de prédire la qualité d'une transmission dans un système de transmission photonique qui soient à la fois suffisamment précises pour être utiles et suffisamment simples pour être exploitées d'une manière automatisée dans un processus de sélection de chemin. A défaut d'une précision suffisante, une surestimation sévère de la qualité de la transmission conduirait à tenter d'établir des connexions photoniques inutilisables, et une sous-estimation sévère de la qualité de la transmission conduirait à gaspiller des ressources du réseau en excluant a priori des connexions photoniques physiquement faisables.

Pour cela, l'invention fournit un procédé pour réaliser un estimateur de qualité de transmission pour un système de transmission photonique, ledit procédé comprenant les étapes consistant à :

a) effectuer une pluralité de calculs de propagation par un modèle de propagation rendant compte d'une interaction non-linéaire entre signaux optiques, lesdits calculs de propagation portant sur la transmission d'un signal optique sur une longueur d'onde porteuse le long d'un chemin comportant une pluralité de segments successifs, chacun desdits calculs de propagation comportant les étapes consistant à :

définir des signaux voisins qui sont superposés audit signal optique, par exemple en étant multiplexés spectralement avec ledit signal optique, le long des segments dudit chemin, lesdits signaux voisins étant portés par au moins une longueur d'onde située dans un voisinage de ladite longueur d'onde porteuse, lesdits signaux voisins étant définis de manière à changer selon une règle statistique prédéterminée entre lesdits segments, et

effectuer le calcul de propagation dudit signal optique avec lesdits signaux voisins,

b) calculer un paramètre de qualité de transmission dudit signal optique, ledit paramètre étant obtenu à partir des résultats d'une pluralité desdits calculs de propagation, et

c) stocker ledit paramètre de qualité de transmission en association avec une caractérisation dudit chemin et une caractérisation de ladite règle statistique de changement des signaux voisins dans un dispositif de stockage de données.

Dans un tel procédé, les changements des signaux voisins peuvent être réalisés sous diverses formes, par exemple introduction au niveau d'un segment d'un canal de longueur d'onde absent d'un segment amont, suppression au niveau d'un segment d'un canal de longueur d'onde présent sur le segment amont et changement du contenu numérique porté sur un canal de longueur d'onde.

Selon un mode de réalisation préféré, le changement d'un signal voisin entre deux segments comprend un changement de contenu numérique dudit signal voisin. Avantageusement, le contenu numérique d'un signal voisin comporte une séquence numérique pseudo-aléatoire, le changement dudit signal voisin entre deux segments comprenant l'application d'un décalage temporel à ladite séquence numérique pseudo-aléatoire.

Selon un mode de réalisation préféré, la caractérisation de la règle statistique inclut une loi de probabilité de changement des signaux voisins par changement de segment. Selon les particularités du système de transmission devant être modélisé et le niveau de précision souhaité, cette loi de probabilité peut être conçue avec une plus ou moins grande complexité, notamment en tant que fonction d'un nombre plus ou moins élevé de paramètres. Des paramètres pouvant être pris en compte dans une telle loi sont par exemple la longueur d'onde porteuse en question et/ou les caractéristiques de l'interface entre les segments, à savoir par exemple le degré de connectivité du noeud réalisant cette interface.

Selon un mode de réalisation préféré, on utilise une loi de probabilité uniforme sur toutes les interfaces entre segments et uniforme sur toutes les longueurs d'ondes porteuses. Ces hypothèses se sont avérées pertinentes dans de nombreux cas. Toutefois, certains systèmes particuliers pourraient les mettre en défaut et requérir des lois de probabilité conditionnelles plus complexes et/ou une segmentation du spectre en plusieurs domaines sur lesquels ces hypothèses sont valides.

Avantageusement dans ce cas, la caractérisation de la règle statistique inclut une valeur de probabilité de changement par canal voisin par changement de segment.

La caractérisation du chemin peut être fournie sous différentes formes, avec un nombre plus ou moins élevé de paramètres, selon les particularités du système de transmission devant être modélisé et le niveau de précision souhaité. Des paramètres pouvant être pris en compte dans la caractérisation du chemin sont généralement toute caractéristique susceptible d'être corrélée avec l'intensité des distorsions physiques cumulées le long du chemin, notamment toute caractéristique intégrée caractérisant le chemin optique de bout en bout. Selon des modes de réalisation préférés, la caractérisation du chemin inclut au moins un paramètre choisi dans le groupe consistant en un nombre de segments du chemin, une longueur du chemin, et une phase non linéaire cumulée du chemin.

Comme paramètre de qualité de transmission, on retient de préférence une valeur « synthétique » représentant une synthèse pertinente des diverses situations simulées dans les calculs de propagation. Diverses méthodes peuvent être envisagées pour cette synthèse. Selon un mode de réalisation, le paramètre de qualité de transmission est obtenu en moyennant les résultats d'une pluralité desdits calculs de propagation. Selon un autre mode de réalisation, le paramètre de qualité de transmission est obtenu en retenant un résultat le plus défavorable parmi une pluralité desdits calculs de propagation.

Un tel procédé peut être utilisé pour réaliser un estimateur de qualité de transmission adapté à un type particulier de chemins, et à une statistique particulière de changement des signaux. Toutefois, un estimateur ayant une applicabilité plus large peut aussi être réalisé. Pour cela, selon des modes de réalisation préférés, les étapes a) à c) sont répétées pour une pluralité de chemins ayant des caractérisations différentes et/ou pour une pluralité de règles statistiques ayant des caractérisations différentes.

L'invention fournit également un dispositif pour déterminer une estimation de qualité de transmission dans un système de transmission photonique, ledit dispositif comportant :

une interface d'entrée pour recevoir un descriptif de connexion photonique, ledit descriptif comportant au moins un paramètre d'une connexion photonique à estimer, une interface de sortie pour fournir une estimation de qualité de transmission correspondant à ladite connexion photonique à estimer, une structure de données comportant une pluralité de caractérisations de chemins-types, une pluralité de caractérisations de changements-types des signaux optiques entre des segments desdits chemins-types, et des paramètres de qualité de transmission associés chacun à une caractérisation de chemin-type et une caractérisation de changement-type, et

des moyens de traitement aptes à sélectionner au moins une caractérisation de chemin-type et au moins une caractérisation de changement-type en fonction dudit descriptif de connexion photonique à estimer, à sélectionner dans la structure de données au moins un paramètre de qualité de transmission associé auxdites caractérisation de chemin-type et caractérisation de changement-type, et à calculer ladite estimation de qualité de transmission en fonction dudit paramètre de qualité de transmission sélectionné ou desdits paramètres de qualité de transmission sélectionnés.

Une telle structure de données peut être obtenue par tout moyen approprié, notamment par des mesures expérimentales ou par le procédé pour réaliser un estimateur de qualité de transmission décrit précédemment. Dans ce dernier cas, les caractérisations de changements-types et les caractérisations de chemins-types correspondent respectivement aux caractérisations de règles statistiques et aux caractérisations de chemins utilisées dans le procédé décrit précédemment.

Par exemple, les caractérisations de chemin-type comportent un nombre de noeuds de commutation traversés, une longueur, ou une phase non linéaire cumulée. Par exemple, les caractérisations de changement-type comportent une loi de probabilité de changement par canal voisin par changement de segment.

Le descriptif de connexion photonique est préférablement conçu de manière adaptée aux caractérisations de chemins-types contenues dans la structure de données, de manière à faciliter la mise en correspondance du premier avec les secondes. Selon des modes de réalisation, la sélection par les moyens de traitement d'une caractérisation de chemin-type en fonction du descriptif de connexion photonique peut être une mise en correspondance directe ou impliquer des traitements intermédiaires. Selon un mode de réalisation préféré, le descriptif de connexion photonique à estimer comporte au moins un paramètre choisi dans le groupe consistant en un nombre de noeuds de commutation photonique traversés par la connexion photonique, une longueur de la connexion photonique, et une phase non linéaire cumulée de la connexion photonique.

Selon un autre mode de réalisation, le descriptif de connexion photonique à estimer comporte une séquence d'identifiants d'éléments topologiques du système de transmission photonique traversés par la connexion photonique à estimer. Les éléments topologiques peuvent inclure des noeuds, des interfaces et/ou des liens. A partir de ces informations de routage plus détaillées, il est possible de calculer divers paramètres macroscopiques de la connexion, notamment en faisant appel à des données de description du système de transmission.

De préférence, le descriptif de connexion photonique à estimer comporte un taux de changement de signaux optiques voisins par changement de segment, ledit taux de changement caractérisant des changements de signaux optiques voisins d'une longueur d'onde porteuse de la connexion photonique, lesdits signaux voisins étant portés par au moins une longueur d'onde située dans un voisinage de ladite longueur d'onde porteuse.

Selon un mode de réalisation particulier, ledit taux de changement est un taux particulier calculé pour la connexion photonique à estimer à partir d'une carte de distribution des longueurs d'ondes dans ledit système de transmission photonique.

Selon un autre mode de réalisation particulier, ledit taux de changement est un taux moyen calculé en fonction d'un nombre de segments de la connexion photonique à estimer.

L'invention fournit également un procédé pour réaliser un estimateur de changement des signaux voisins d'une longueur d'onde porteuse dans un système de transmission photonique, caractérisé par le fait qu'il comporte les étapes consistant à :

sélectionner un ensemble de connexions photoniques dans ledit système de transmission photonique, chaque connexion photonique comportant une longueur d'onde porteuse transmise le long d'un chemin comportant plusieurs segments, pour chaque connexion photonique dudit ensemble, à chaque interface entre deux segments successifs du chemin de ladite connexion photonique, dénombrer les signaux optiques voisins de la longueur d'onde porteuse de ladite connexion photonique qui sont modifiés, lesdits signaux voisins étant portés par au moins une longueur d'onde située dans un voisinage de ladite longueur d'onde porteuse, à partir desdits dénombrements, calculer un taux de changement moyen des signaux optiques voisins par interface, ledit taux de changement étant moyenné sur une pluralité de connexions photoniques dudit ensemble ayant le même nombre d'interfaces entre segments, et
stocker lesdits taux de changement moyen en association avec les nombres d'interfaces correspondants dans un dispositif de stockage de données.

L'invention fournit également un procédé pour déterminer un taux de changement de signaux optiques voisins par changement de segment pour une connexion photonique comportant une longueur d'onde porteuse transmise le long d'un chemin comportant plusieurs segments dans un système de transmission photonique, ledit procédé comportant les étapes consistant à :

à chaque interface entre deux segments successifs du chemin de ladite connexion photonique, dénombrer les signaux optiques voisins de la longueur d'onde porteuse de ladite connexion photonique qui sont modifiés, lesdits signaux voisins étant portés par au moins une longueur d'onde située dans un voisinage de ladite longueur d'onde porteuse, à partir desdits dénombrements, calculer un taux de changement des signaux optiques voisins par interface, ledit taux de changement étant rapporté à un nombre des interfaces de segments traversées par ledit chemin et/ou à un nombre des canaux de longueurs d'onde situés dans ledit voisinage de la longueur d'onde porteuse.

L'invention part du constat que, dans un réseau tout-optique WDM, des noeuds de commutation photonique, par exemple du type multiplexeur optique reconfigurable à insertion-extraction (ROADM) ou brasseur optique (OXC), présentent une fonction d'aiguillage sélectif (ou blocage sélectif) du transit entre un lien entrant et un lien sortant, qui permet de faire passer vers le lien sortant des canaux de longueur d'onde sélectionnés dans le multiplex porté par le lien entrant et de ne pas faire passer le reste de ces canaux vers le lien sortant, et/ou une fonction d'insertion qui permet d'insérer dans le lien sortant un ou plusieurs canaux de longueur d'onde qui n'étaient pas présents dans le multiplex porté par le lien entrant ou qui n'ont pas été sélectionnés au niveau de l'aiguillage sélectif du transit. En d'autres termes, lorsqu'on réalise une connexion photonique, un signal porté par un canal de longueur d'onde est propagé de manière transparente de bout en bout le long d'un chemin traversant un ou plusieurs noeuds de commutation photonique. En revanche, au niveau de chacun de ces noeuds, qui forment des interfaces entre des segments du chemin, des opérations de commutation, d'insertion ou d'extraction qui affectent les canaux de longueur d'onde voisins de ce canal sont susceptibles d'intervenir, notamment ajout d'un canal voisin, suppression d'un canal voisin ou modification du signal porté par le canal voisin.

Une idée à la base de l'invention est que certaines distorsions physiques affectant la qualité de transmission de la connexion photonique, notamment des effets non-linéaires comme la modulation de phase croisée (XPM), ont une intensité qui dépend de la durée de l'interaction entre signaux optiques et sont donc substantiellement influencées par les opérations précitées. Selon certains aspects, l'invention propose de réaliser un estimateur de qualité de transmission qui rende compte de ces opérations et de leurs effets quant à l'intensité des effets non-linéaires.

Une autre idée à la base de l'invention est de modéliser le contenu d'un canal de longueur d'onde dans un système de transmission photonique comme un processus aléatoire décrit par des règles statistiques.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :

La figure 1 est une représentation schématique de connexions photoniques établies dans un réseau de communication tout-optique.

La figure 2 illustre le voisinage d'un canal de longueur d'onde selon un mode de réalisation de l'invention.

La figure 3 représente un modèle de système de transmission pouvant être utilisé dans le procédé de la figure 5.

La figure 4 représente un algorithme de fonctionnement d'un module de changement de signal.

La figure 5 est un diagramme d'étapes d'un procédé de calcul d'un paramètre de qualité de transmission moyen selon un mode de réalisation de l'invention.

Les figures 6 et 7 représentent des structures de données de qualité de transmission pouvant être obtenue par le procédé de la figure 5.

La figure 8 est un diagramme d'étapes d'un procédé pour exploiter la structure de données de la figure 6 ou 7.

Les figures 9 et 10 sont des diagrammes d'étapes de procédés pour déterminer un taux de changement du signal par canal et par segment.

La figure 11 est un diagramme fonctionnel d'un dispositif d'estimation de la qualité de transmission selon un mode de réalisation de l'invention.

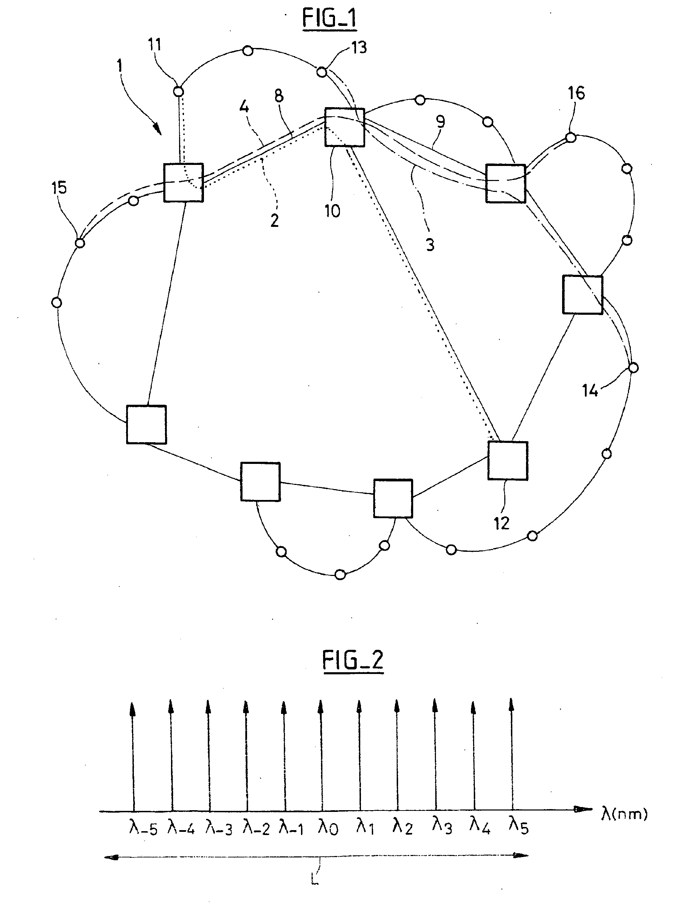

En référence à la figure 1, on a représenté très schématiquement un réseau de communication tout-optique 1 comprenant une pluralité de noeuds de commutation photonique (cercles et carrés) relié par des liens optiques (traits pleins). La topologie, le nombre et la nature des noeuds et des liens sont purement arbitraires pour les besoins de l'illustration. Les cercles représentent par exemple des ROADM et les carrés des OXC. Le réseau peut comporter bien d'autres éléments qui n'ont pas été représentés ici, par exemple amplificateurs optiques, modules de compensation de la dispersion, fibres optiques d'un ou plusieurs types, et autres éléments utilisés dans un réseau tout-optique. Ainsi, la représentation simplifiée n'exclut pas qu'un lien soit composé d'un assemblage des éléments précités. Dans cette description, la structure pertinente pour modéliser le réseau est le segment. Un segment est un support de propagation optique le long duquel n'est disposé aucun élément susceptible de modifier substantiellement le contenu des signaux optiques multiplexés. Sur la figure 1, seuls les noeuds de commutation sont susceptibles de modifier ce contenu. Les liens entre les noeuds correspondent donc à des segments et les noeuds de commutation photonique à des interfaces entre segments. Les longueurs d'onde porteuses sont par exemple choisies dans une grille normalisée pour laquelle le réseau a été conçu.

Trois connexions photoniques sont représentées aux chiffres 2, 3 et 4. La connexion 2 est établie entre le ROADM 11 et l'OXC 12. La connexion 3 est établie entre les ROADM 13 et 14. La ligne 4 correspond à une connexion que l'on souhaite établir entre les ROADM 15 et 16. Le chemin et le canal de longueur d'onde de la connexion 4 ont été déterminés auparavant par un procédé de calcul de route, en tenant compte par exemple des longueurs d'ondes disponibles et des commutations possibles au niveau des noeuds. Toutefois, avant d'établir la nouvelle connexion 4, il est souhaitable d'estimer la qualité de transmission qu'elle offrira. On va maintenant décrire des procédés permettant de réaliser et d'exploiter un estimateur de qualité de transmission capable de fournir une telle estimation.

En référence à la figure 2, on définit le voisinage spectral d'un canal de longueur d'onde $\lambda 0$ comme étant une plage de longueur d'onde L contenant tous les canaux de longueur d'onde susceptibles d'avoir une interaction physique substantielle avec le canal $\lambda 0$, notamment par modulation de phase croisée. On appelle canaux voisins ces canaux de longueur d'onde. Le voisinage spectral peut être déterminé pour un système donné à partir de la connaissance de quelques paramètres du système, notamment l'espacement spectral de la grille et le format de modulation des données. Le nombre des canaux voisins dépend de l'espacement spectral de la grille. Dans l'exemple représenté, par exemple pour un espacement inter-canal de 50GHz, le voisinage du canal $\lambda 0$ contient 10 canaux voisins référencés $\lambda$-5 à $\lambda$-1 pour les longueurs d'onde inférieures à $\lambda 0$ et $\lambda 1$ à $\lambda 5$ pour les longueurs d'onde supérieures à $\lambda 0$.

Par exemple, on peut supposer que les connexions 2 et 3 utilisent le canal $\lambda 1$ et que la connexion 4 doit utiliser le canal $\lambda 0$. Dans cette hypothèse, le signal porté par la connexion 4 va interagir fortement avec le signal porté par la connexion 2 le long du segment 8 et avec le signal porté par la connexion 3 le long du segment 9. Or, les signaux portés par les connexions 2 et 3 sont généralement totalement décorrelés. Au total, l'interaction non-linéaire du canal $\lambda 0$ avec le canal $\lambda 1$ le long de la connexion 4 est donc moins forte que si la connexion 2 utilisait le canal $\lambda 1$ aussi dans le segment 9 à la place de la connexion 3. En effet, les commutations du canal λ1 au niveau de l'OXC 10 introduisent un changement du contenu du canal λ1 entre les segments 8 et 9. On propose ci-dessous un estimateur de qualité de transmission qui rend compte de ce fait en modélisant le contenu du canal voisin λ1 comme un processus aléatoire.

Réalisation d'un estimateur de la qualité de transmission par le calcul

Pour déterminer la qualité d'un signal S0 transmis sur le canal λ0 compte tenu des interactions avec les canaux voisins, on utilise un programme de simulation électromagnétique fondé sur une discrétisation du milieu de propagation et une résolution des équations de propagation par une méthode numérique. Des programmes de ce type sont disponibles dans le commerce, par exemple auprès de VPI Photonics™ ou Rsoft Design Group, Inc. Le programme est paramétré avec une description physique du milieu de propagation aussi fidèle que possible au réseau optique 1, notamment en termes de nature des fibres, dispersion chromatique et coefficients de non-linéarité. Dans un mode de réalisation, le calcul est fondé sur la résolution de l'équation de Schrödinger dans un espace monodimensionnel.

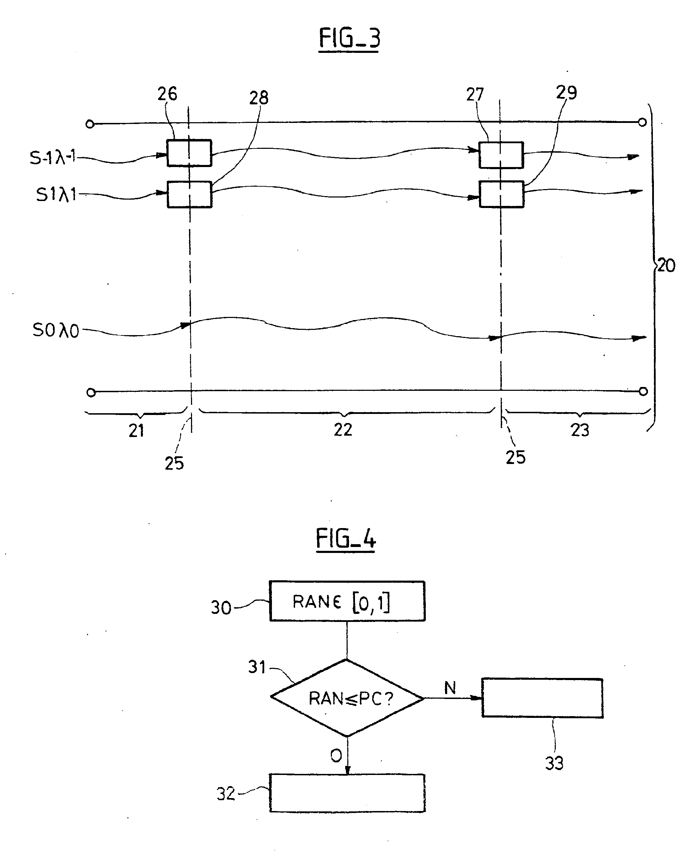

La figure 3 est une représentation schématique de la propagation telle qu'elle est modélisée dans le calcul de simulation. Le chemin de la connexion est divisé en plusieurs segments 21, 22, 23. Le calcul de propagation est effectué segment par segment. Chaque segment est caractérisé par une description physique du milieu de propagation 20 (longueur, indices, coefficients de non-linéarité, etc.) Selon un mode de réalisation particulier, les segments sont homogènes et identiques. Toutefois, des descriptions plus détaillées et plus complexes peuvent être employées selon les particularités du système à modéliser. A l'entrée du premier segment 21, le signal S0 est généré sur le canal λ0 et des signaux Si sont générés sur les canaux voisins λi. Dans l'exemple représenté, il n'y a que deux canaux voisins i=1 et i=-1 par mesure de simplicité. Sur la figure 3, pour les besoins de la représentation, on a représenté comme une juxtaposition des canaux qui sont en fait multiplexés dans le milieu de propagation.

Pour simuler une connexion transparente, le signal S0 est propagé d'un bout à l'autre de la séquence de segments 21, 22, 23. En d'autres termes, sur le canal λ0, le champ électromagnétique entrant dans un segment est identique au champ électromagnétique sortant du segment précédent. Sur chaque segment, le calcul de propagation tient compte de la superposition du canal λ0 avec les canaux voisins λi afin de rendre compte des distorsions physiques induites par cette superposition, notamment les effets non-linéaires. Toutefois, contrairement au canal λ0 formant la connexion transparente, les canaux voisins λi ne se propagent pas systématiquement de manière transparente d'un segment à l'autre. C'est une règle statistique qui décrit la relation entre le signal Si porté par le canal λi à la sortie d'un segment et le signal Si porté par le canal λi à l'entrée du segment suivant. Cette règle statistique est mise en oeuvre par des modules de changement de signal 26, 27, 28 et 29 pour chaque canal voisin λi au niveau de chaque interface 25 entre segments.

Selon un mode de réalisation, la règle statistique mise en oeuvre par les modules de changement de signal 26 à 29 est caractérisée par une probabilité de changement PC. Dans ce cas, le signal Si qui sort du module de changement présente une probabilité PC d'être sensiblement décorrélé du signal entrant et une probabilité (1-PC) d'être identique au signal entrant. La figure 4 représente un algorithme pouvant être utilisé dans un tel module. La probabilité PC est supposée fixée à l'avance. A l'étape 30, un nombre RAN est généré aléatoirement dans l'intervalle [0,1]. A l'étape 31, le nombre RAN est comparé à PC. Lorsque RAN≤PC, à l'étape 32, le module de changement de signal est configuré dans un état de remplacement du signal. Dans cet état, le module introduit dans le segment suivant un signal Si qui est décorrélé du signal Si présent dans le segment précédent. Lorsque RAN>PC, à l'étape 33, le module de changement de signal est configuré dans un état de non-remplacement du signal. Dans cet état, le module introduit dans le segment suivant un signal Si qui est identique au signal Si présent dans le segment précédent.

Selon une mise en oeuvre particulière, les signaux voisins Si sont générés avec un générateur de séquence numérique pseudo-aléatoire. Dans ce cas, l'étape 32 peut être mise en oeuvre en introduisant un décalage aléatoire D dans le générateur. En d'autres termes, pour un signal dans le segment précédent Si=PRBS(t), le signal introduit dans le segment suivant est Si=PRBS(t+D).

Dans un calcul de simulation selon le modèle de la figure 3, les modules de changement de signal 26 à 29 sont configurés une seule fois au début du calcul de simulation. Le contenu des signaux Si est donc fixé de manière déterministe pour la durée d'un calcul. En d'autres termes, un calcul de simulation porte sur une réalisation particulière des signaux voisins Si. Le résultat du calcul fournit le signal S0 sortant du dernier segment sur le canal λ0. Ce signal calculé rend compte des interactions subies par le canal λ0 avec les canaux voisins λi le long du chemin 21, 22, 23. Comme le signal S0 généré en entrée est aussi connu, on peut calculer un paramètre de qualité de la transmission du canal λ0 correspondant à ce chemin.

Il existe plusieurs manières de caractériser la qualité d'une transmission. Selon une convention courante, on peut utiliser pour cela un paramètre de rapport signal sur bruit optique (OSNR) requis au niveau du récepteur pour maintenir une valeur prédéfinie du taux d'erreur binaire (BER). Dans la suite, on utilisera donc ce paramètre pour caractériser la qualité de transmission et on désignera ce paramètre par le symbole OSNR. Par exemple, le BER est fixé à $10^{-5}$. Selon cette convention, le paramètre OSNR représente une sensibilité : plus cette sensibilité est élevée, plus la qualité du signal est mauvaise. D'autres paramètres de qualité et d'autres conventions peuvent aussi être employés.

Dans le mode de réalisation décrit ci-dessus, les modules de changement de signal 26 à 29 ne simulent pas le cas, pouvant exister dans la réalité, d'un canal voisin qui serait absent d'un segment. Les cas simulés comportent des signaux sur tous les canaux voisins sur tous les segments. Grâce à cette hypothèse défavorable, dans la mesure où elle tend à maximiser les interactions entre canaux, les estimations obtenues sont robustes et durables, dans la mesure où la croissance du trafic dans le réseau ne sera pas susceptible de les invalider. Toutefois, en variante, il est aussi possible de simuler de la même manière des apparitions/disparitions de canaux voisins aux interfaces entre les segments.

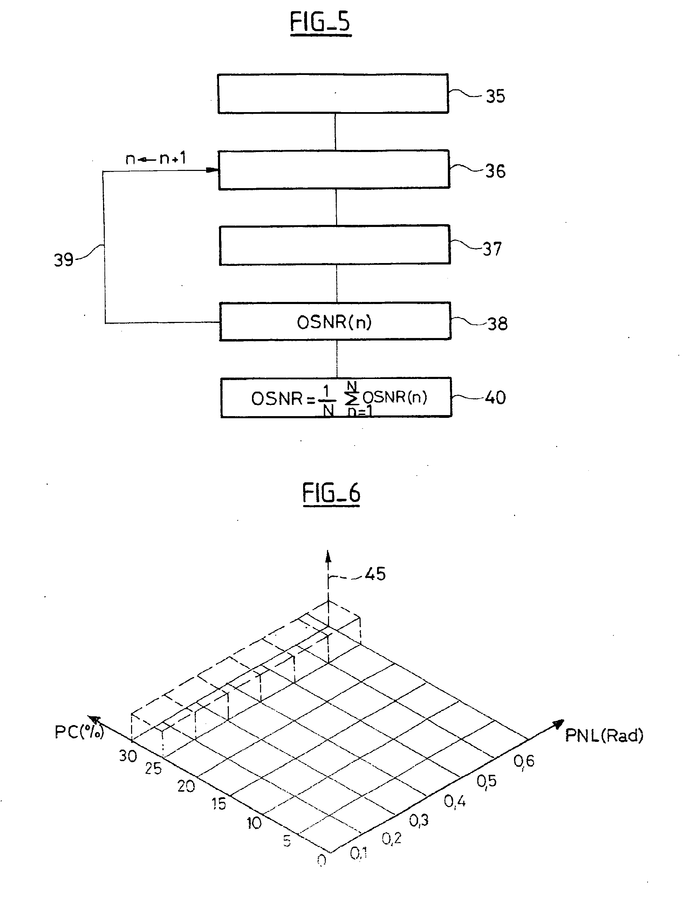

En référence à la figure 5 , on décrit un mode de réalisation du procédé de calcul d'un estimateur de qualité de transmission basé sur ces simulations. A l'étape 35, dans une étape de paramétrage, on fixe la description du chemin de connexion, notamment le nombre de segments NS et leurs longueurs, et la description du milieu de transmission 20. On fixe aussi la règle statistique de changement des signaux voisins. Selon un mode de réalisation préféré, on assigne la même valeur de probabilité PC à tous les modules de changement de signal 26 à 29. Toutefois, on pourrait aussi utiliser des lois de probabilité plus complexes, dépendant par exemple du canal ou du segment.

A l'étape 36, on fixe une réalisation des signaux voisins sur chaque segment respectant la règle statistique choisie. Pour cela, on configure les modules de changement de signal 26 à 29 en exécutant l'algorithme de la figure 3.

A l'étape 37, on effectue le calcul de propagation proprement dit.

A l'étape 38, on calcule le paramètre OSNR(n) résultant du calcul de l'étape 37.

Comme indiqué par la flèche 39, on répète les étapes 36 à 38 un grand nombre de fois, en générant à chaque fois une nouvelle réalisation des signaux voisins sur les segments, pour obtenir une bonne convergence. L'indice n représente les réalisations successives de ce processus aléatoire. On appelle N le nombre de réalisations ainsi générées.

Finalement, à l'étape 40, on calcule le paramètre <OSNR> moyenné sur les N réalisations, à savoir :

$$<OSNR> = (1/N)^* \Sigma OSNR(n)$$

et on stocke <OSNR> et les paramètres correspondants fixés à l'étape 35, par exemple NS et PC.

Dans une variante de réalisation, au lieu de calculer une moyenne à l'étape 40, on sélectionne la valeur maximale de OSNR(n) obtenue au cours des réalisations, ce qui correspond à retenir la plus mauvaise qualité de transmission.

Dans le procédé de calcul de la figure 5, le milieu de propagation est fixé à l'étape 35 et ne change pas au cours des réalisations. En variante, il est possible de combiner un tel calcul avec une description statistique du milieu de propagation, auquel cas il est possible de générer aussi différentes réalisations du milieu de propagation au cours de ce calcul.

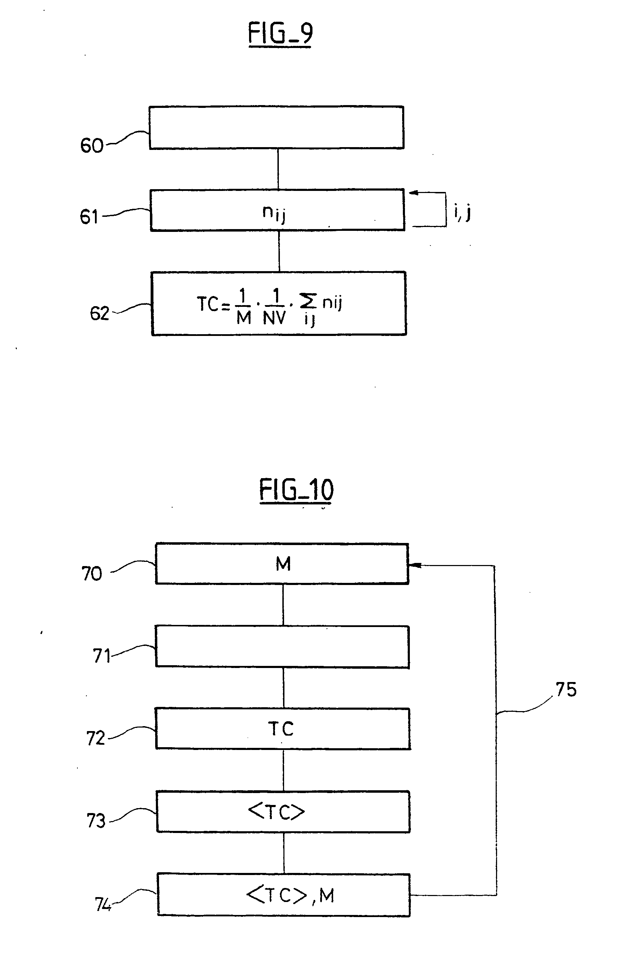

Deux approches sont proposées pour réaliser un estimateur de qualité de transmission. Selon une première approche, on réalise un estimateur spécialement adapté aux caractéristiques d'une nouvelle connexion à établir. Cette première approche revient à faire les simulations de propagation à la demande suivant la connexion candidate. Pour mettre en oeuvre cette approche, on choisit à l'étape 35 des paramètres qui correspondent à la description de la connexion 4 à établir dans la réalité, c'est-à-dire à la description du chemin de cette connexion à établir et du milieu de propagation le long de ce chemin, et à la description statistique des changements des signaux optiques voisins le long de cette connexion à établir. La détermination de la probabilité de changement PC la mieux adaptée à un tel cas sera traitée plus bas en référence aux figures 9 et 10. Cette première approche présente un avantage en termes de précision mais peut se révéler trop lente ou trop exigeante en termes de ressources de calcul pour pouvoir être exploitée de manière dynamique.

Selon une deuxième approche, on réalise un estimateur plus général en réalisant à l'avance des estimations de qualité pour un grand nombre de connexions-types prédéterminées, puis on exploite cet estimateur pour une connexion donnée en recherchant le ou les connexions-types auxquelles cette connexion correspond le mieux. La seconde approche permet de conduire séparément les phases de réalisation et d'exploitation de l'estimateur. En pratique, la réalisation d'un estimateur général peut être ramenée à répéter la réalisation d'un estimateur particulier pour un grand nombre de cas particuliers.

Dans les deux cas, des paramètres doivent être sélectionnés pour caractériser une connexion. Dans l'absolu, de nombreux paramètres peuvent être pris en compte pour cela. Dans le mode de réalisation de la figure 5 ci-dessus, on a retenu essentiellement deux paramètres, à savoir le nombre de segments NS traversés par la connexion et la probabilité de changement de signal PC par canal voisin et par segment.

Selon un mode de réalisation, pour réaliser un estimateur plus général, on répète donc le procédé de la figure 5 pour différents chemins et différentes probabilités de changement des signaux. Les résultats de ces calculs peuvent être stockés sous la forme d'une structure de données à plusieurs dimensions, par exemple une base de données relationnelle, dans tout dispositif de stockage approprié. La figure 6 représente un exemple d'une telle structure de données. Ici, le paramètre <OSNR> est tabulé à chaque fois en fonction de la valeur de probabilité PC et de la phase non linéaire cumulée PNL de la connexion. La phase non-linéaire PNL d'une connexion est calculée conformément aux formules données dans le draft internet « Non-linear Routing impairments in Wavelength Switched Optical networks », IETF, novembre 2001. Comme indiqué par l'axe 45, la structure de données peut présenter plus de deux dimensions. Par exemple, le paramètre <OSNR> pourrait encore être tabulé en fonction d'un ou plusieurs autres paramètres, par exemple décrivant la carte de dispersion, les propriétés du récepteur, la compensation de la dispersion effectuée au niveau du récepteur, ou la longueur d'onde porteuse de la connexion. Toutefois, si les propriétés physiques du réseau à simuler sont sensiblement uniformes pour toute la grille de longueurs d'ondes, un calcul peut être considéré valide pour toutes les longueurs d'ondes.

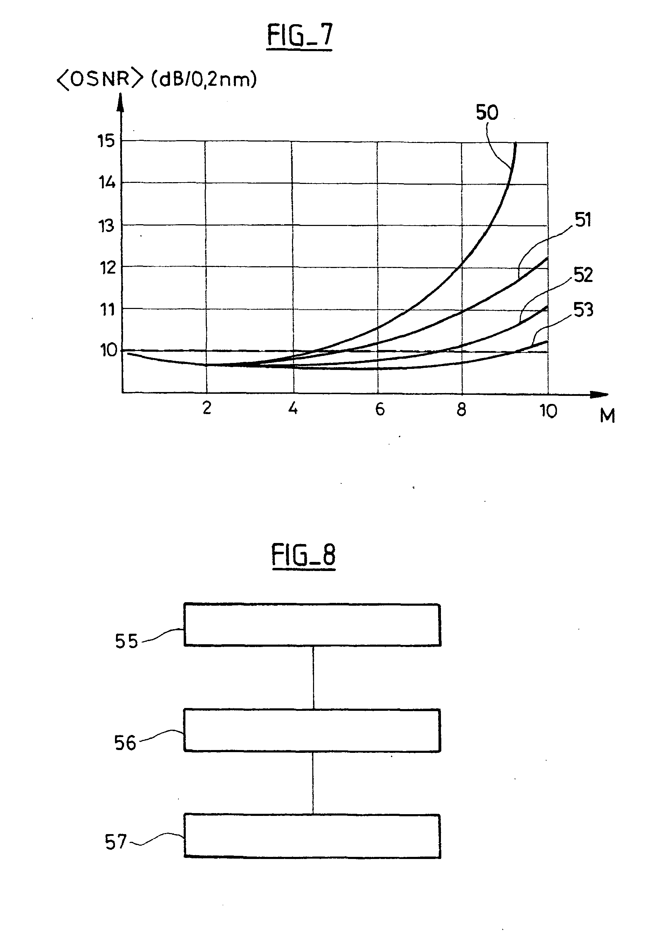

La figure 7 est une autre représentation graphique des paramètres de qualité de transmission pouvant être obtenus de cette manière. Dans cet exemple, la simulation porte sur 19 canaux de longueur d'onde espacés de 50GHz, à savoir un canal central et 18 canaux voisins distribués des deux côtés du canal central. Les signaux numériques sont produits par un générateur d'une séquence pseudo-aléatoire de longueur 1024 bits. Les signaux sont modulés à un taux de 10,7Gbit/s selon un format NRZ. La figure représente le paramètre <OSNR> du canal central à 1550,12nm en fonction du nombre de noeuds de commutation photonique traversés M et de la probabilité PC, qui est uniforme sur tous les canaux voisins et tous les segments. Les segments sont identiques. Un segment comporte quatre longueurs de fibre SMF de 80km chacune avec une compensation de la dispersion chromatique sur chaque longueur. La dispersion résiduelle sur chaque longueur est +100 ps/nm. La dispersion résiduelle sur un segment est 0ps/nm (compensation totale). Cette hypothèse crée des résonances pénalisantes entre les canaux en raison de la XPM. A l'interface entre deux segments, une fonction de filtrage uniforme sur tous les canaux simule la présence d'un noeud OXC. Les courbes 50, 51, 52 et 53 correspondent respectivement aux valeurs de PC suivantes : 0%, 20%, 40%, 60%.

La figure 7 montre globalement que pour un chemin donné, la sensibilité <OSNR> diminue lorsque la probabilité PC augmente. Un estimateur qui ne tiendrait pas compte de la variation des signaux voisins selon les segments, i.e. PC=0%, sous-estimerait donc systématiquement la qualité de la transmission, d'une manière particulièrement aiguë pour les longs chemins.

En variante, le milieu de propagation peut aussi recevoir une description statistique. Par exemple, dans les calculs de simulation, les incertitudes sur la carte de dispersion peuvent suivre une loi gaussienne. Ceci peut être utilisé pour réaliser un estimateur applicable à un réseau dans lequel les valeurs de dispersion sont mal connues.

Exploitation d'un estimateur de la qualité de transmission

La figure 8 représente un mode de réalisation d'un procédé pour exploiter l'estimateur de qualité de transmission de la figure 6 ou 7. A l'étape 55, on fournit des paramètres caractéristiques du chemin de la connexion à établir, par exemple, le nombre de segments ou la phase non-linéaire cumulée. A l'étape 56, on fournit des paramètres caractéristiques de la statistique de changement des signaux le long de la connexion à établir, par exemple une probabilité PC. A l'étape 57, on recherche dans la structure de données de l'estimateur un paramètre de qualité correspondant aux données fournies. Si les données fournies ne correspondent pas exactement à une valeur tabulée, des interpolations entre plusieurs des valeurs tabulées sont effectuées. Le même procédé est également applicable à un estimateur de qualité de transmission qui aurait été obtenu d'une autre manière, par exemple par des mesures expérimentales.

Pour cela, il se pose le problème de sélectionner la valeur de probabilité de changement PC la mieux adaptée à la connexion dont on souhaite prédire la qualité de transmission, c'est-à-dire le problème d'estimer une probabilité de changement des signaux PC correspondant à la connexion à établir. Plusieurs méthodes sont disponibles pour cela, selon les informations disponibles quant à la connexion à établir. La figure 9 et la figure 10 représentent deux procédés pour estimer cette probabilité de changement PC à partir d'un taux de changement des signaux voisins le long du chemin.

Dans le procédé de la figure 9, on suppose qu'on dispose du chemin exact de la connexion à établir, de sa longueur d'onde porteuse $\lambda 0$ et d'une carte précise des connexions déjà établies dans le réseau, comportant des informations telles que les routes, les longueurs d'onde porteuses et les commutations de longueur d'onde effectuées à chaque noeud. A l'étape 60, on détermine les noeuds de commutations photoniques traversés par la connexion à établir, qui seront dénotés par l'indice j allant de 1 à M, M est le nombre total de noeuds traversés.

A l'étape 61, pour un noeud j, pour un canal voisin i, on détermine à partir de la carte des connexions si ce canal voisin i subit un changement au niveau du noeud j entre le lien suivi par la connexion en amont du noeud et le lien suivi par la connexion en aval du noeud. On définit un indicateur de changement $n_{ij}=1$ s'il y a un tel changement, et $n_{ij}=0$ s'il n'y a pas de changement. Selon un mode de réalisation, on fixe $n_{ij}=0$ si le canal $\lambda i$ appartient à la même connexion sur le lien en amont du noeud j et sur le lien en aval du noeud j, autrement dit si le canal i est commuté de manière transparente parallèlement aux canal $\lambda 0$ dans le noeud j, et on compte $n_{ij}=1$ dans tous les autres cas. En d'autres termes, on compte aussi comme des changements du canal voisin $\lambda i$ toute absence du canal $\lambda i$ sur le lien en amont et/ou en aval du noeud j.

L'étape 61 est répétée pour tous les noeuds traversés et tous les canaux λi appartenant au voisinage de λ0, i allant de 1 à NV, NV étant le nombre de canaux voisins de λ0.

A l'étape 62 on calcule le taux de changement des signaux voisins de la connexion TC comme étant :

$$TC = (1/NV)*(1/M)*\Sigma nij$$

où la somme est étendue à tous les noeuds traversés et tous les canaux voisins.

Le procédé de la figure 9 revient à calculer un taux réel de changement des signaux voisins en fonction de la connexion candidate. Il présente un avantage en termes de précision mais peut se révéler trop lent ou trop exigent en termes de ressources de calcul pour pouvoir être exploitée à la demande de manière dynamique.

Selon une autre approche, on réalise un estimateur de la probabilité de changement des signaux plus général en déterminant à l'avance des estimations de la probabilité de changement PC pour un grand nombre de connexions préétablies, puis on exploite cet estimateur de la probabilité de changement des signaux pour une connexion donnée en recherchant les connexions préétablies auxquelles cette connexion correspond le mieux. Cette seconde approche permet de conduire séparément les phases de réalisation et d'exploitation de l'estimateur de la probabilité de changement des signaux.

La figure 10 représente un procédé pour réaliser un tel estimateur de la probabilité de changement des signaux PC qui est basé sur le taux de changement des signaux voisins le long des connexions préétablies dans un réseau. Le réseau qui sert à établir cet estimateur de la probabilité de changement des signaux peut être le même que le réseau 1 dans lequel on souhaite prédire la qualité d'une transmission, ou un autre réseau, réel ou simulé, ayant des caractéristiques de trafic similaires. On suppose qu'on dispose d'une carte précise des connexions déjà établies dans le réseau, comportant des informations telles que les routes, les longueurs d'onde porteuses et les commutations de longueur d'onde effectuées à chaque noeud. A l'étape 70, on sélectionne un nombre M, entier supérieur à 1. A l'étape 71, on sélectionne dans la carte des connexions un ensemble de connexions qui traversent M noeuds de commutation, en d'autres termes qui présentent M+1 segments.

A l'étape 72, on réalise pour chacune des connexions sélectionnées les calculs exposés à la figure 9, pour obtenir le taux de changement TC et on stocke cette valeur.

A l'étape 73, on calcule le taux de changement moyen <TC>, en moyennant le taux de changement TC sur l'ensemble des connexions sélectionnées à l'étape 71.

A l'étape 74, on stocke taux de changement moyen <TC> et le nombre de noeud correspondant M dans une structure de données, par exemple une base de données.

Comme indiqué par la flèche 75, on peut répéter les étapes 70 à 74 pour toutes les valeurs de M significatives dans le réseau.

Pour exploiter l'estimateur de probabilité de changement ainsi obtenu, on utilise comme entrée le nombre de segments NS de la connexion à établir et on recherche dans la structure de données de l'estimateur un taux de changement moyen <TC> correspondant au nombre de noeuds M=NS-1. Si cette valeur n'est pas tubulée, des interpolations entre plusieurs des valeurs tabulées sont effectuées.

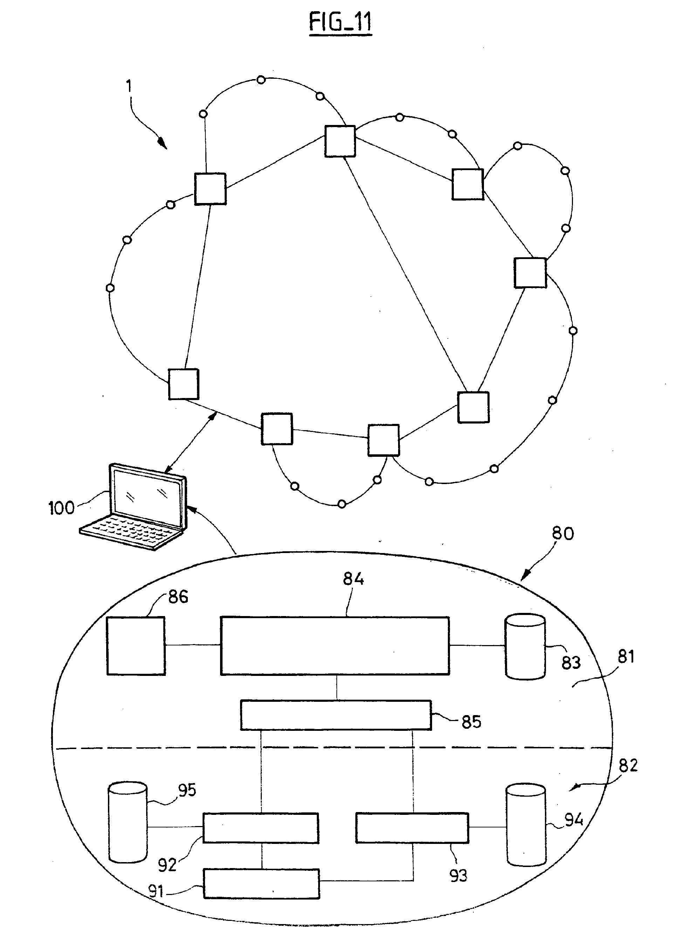

En référence à la figure 11, on décrit maintenant un dispositif d'estimation de qualité de transmission 80 convenant pour mettre en oeuvre un ou plusieurs des procédés décrits ci-dessus. Selon un mode de réalisation, ce dispositif comporte un étage d'estimation 81 et un étage de caractérisation 82.

L'étage d'estimation 81 comporte un module de stockage 83, un module d'estimation 84, une interface d'entrée 85 et une interface de sortie 86. Le module de stockage 83 stocke une structure de données comprenant des paramètres de qualité de transmission associés à des caractérisations de chemin-type et des caractérisations de changement-type, par exemple similairement aux structures de données représentées sur les figures 6 et 7. Le module d'estimation 84 met en oeuvre le procédé de la figure 8. Il reçoit les paramètres caractéristiques du chemin de la connexion à établir et les paramètres caractéristiques de la statistique de changement des signaux le long de la connexion à établir dans l'interface d'entrée 85. Il recherche dans le module de stockage 83 un paramètre de qualité correspondant à ces entrées et fournit ce paramètre de qualité au niveau de l'interface de sortie 86.

L'étage de caractérisation 82 comporte une interface d'entrée 91, un module de caractérisation de statistique de changement 92, un module de caractérisation de chemin 93 et des modules de stockage 94 et 95. L'interface d'entrée 91 est apte à recevoir des informations de route relatives à une connexion depuis un module de routage non représenté. Le module de caractérisation de chemin 93 accède à ces informations de route et détermine à partir de celles-ci une caractérisation du chemin correspondant qui est adaptée à une exploitation par l'étage d'estimation 81. Pour cela, le module de stockage 94 comporte une description du réseau permettant au module de caractérisation de chemin 93 de déterminer par exemple le nombre de segments NS ou la phase non linéaire cumulée ou tout autre paramètre descriptif du chemin nécessaire pour l'étage d'estimation 81. Le ou les paramètres descriptifs sont fournis à l'interface d'entrée 85. Le module de caractérisation de statistique de changement 92 accède aux informations de route et détermine à partir de celles-ci une caractérisation des changements des signaux entre les segments qui est adaptée à une exploitation par l'étage d'estimation 81. Selon une première variante, le module 92 met en oeuvre le procédé de la figure 9. Dans ce cas, le module de stockage 95 comporte la carte des connexions établies dans le réseau. Selon une deuxième variante, le module 92 exploite un estimateur de la probabilité de changement des signaux obtenu par le procédé de la figure 10. Dans ce cas, le module de stockage 95 comporte la structure de données correspondante. Le paramètre TC ou <TC> déterminé ainsi par le module 92 est fourni à l'interface d'entrée 85.

En variante, certains modules constituant le dispositif 80 peuvent être réalisés ou utlisés de manière séparée les uns des autres.

Le dispositif 80 peut être intégré à un équipement relié au réseau 1, par exemple un système de gestion de réseau 100. Un système de gestion de réseau peut être un équipement matériel, par exemple un micro-ordinateur, une station de travail, un appareil connecté à l'Internet ou tout autre dispositif de communication spécialisé ou à usage général. Des programmes logiciels exécutés par ce système remplissent des fonctions de gestion du réseau pour contrôler des éléments de réseau.

Certains des éléments représentés, notamment les modules fonctionnels et les stockages de données, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. Ainsi, dans les procédés décrits, certaines étapes peuvent être effectuées dans un autre ordre ou de manière simultanée.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs moyens ou modules peuvent être représentés par un même élément matériel.

Dans les revendications, tout signe de référence entre parenthèses ne saurait être interprété comme une limitation de la revendication.

## Revendications

**1.** Procédé pour réaliser un estimateur de qualité de transmission pour un système de transmission photonique (1), ledit procédé étant **caractérisé par** les étapes consistant à :

> a) effectuer une pluralité de calculs de propagation par un modèle de propagation rendant compte d'une interaction non-linéaire entre signaux optiques, lesdits calculs de propagation portant sur la transmission d'un signal optique (S0) sur une longueur d'onde porteuse ($\lambda$0) le long d'un chemin comportant une pluralité de segments successifs (21, 22, 23), chacun desdits calculs de propagation comportant les étapes consistant à :

>> définir (36) des signaux voisins (S1) qui sont superposés audit signal optique le long des segments dudit chemin, lesdits signaux voisins étant portés par au moins une longueur d'onde ($\lambda$1) située dans un voisinage de ladite longueur d'onde porteuse, lesdits signaux voisins étant définis de manière à changer selon une règle statistique prédéterminée entre lesdits segments, et
>> effectuer (37) le calcul de propagation dudit signal optique avec lesdits signaux voisins,

> b) calculer (40) un paramètre de qualité de transmission dudit signal optique, ledit paramètre de qualité de transmission étant obtenu à partir des résultats d'une pluralité desdits calculs de propagation, et
> c) stocker ledit paramètre de qualité de transmission en association avec une caractérisation dudit chemin et une caractérisation de ladite règle statistique de changement des signaux voisins dans un dispositif de stockage de données.

**2.** Procédé selon la revendication 1, **caractérisé par le fait que** le changement d'un signal voisin entre deux segments comprend un changement de contenu numérique dudit signal voisin.

**3.** Procédé selon la revendication 1 ou 2, **caractérisé par le fait que** le contenu numérique d'un signal voisin comporte une séquence numérique pseudo-aléatoire, le changement dudit signal voisin entre deux segments comprenant l'application d'un décalage temporel à ladite séquence numérique pseudo-aléatoire.

**4.** Procédé selon l'une des revendications 1 à 3, **caractérisé par le fait que** la caractérisation de ladite règle statistique inclut une valeur de probabilité de changement par canal voisin par changement de segment (PC).

5. Procédé selon l'une des revendications 1 à 4, **caractérisé par le fait que** la caractérisation dudit chemin inclut au moins un paramètre choisi dans le groupe consistant en un nombre de segments du chemin, une longueur du chemin et une phase non linéaire cumulée du chemin (PNL).

6. Procédé selon l'une des revendications 1 à 5, **caractérisé par le fait que** ledit paramètre de qualité de transmission est obtenu en moyennant les résultats de la pluralité desdits calculs de propagation.

7. Dispositif (80, 81) pour déterminer une estimation de quotité de transmission dans un système de transmission photonique, ledit dispositif étant **caractérisé par le fait qu'**il comporte:

    une interface d'entrée (85, 91) pour recevoir un descriptif de connexion photonique, ledit descriptif comportant au moins un paramètre d'une connexion photonique à estimer, une interface de sortie (86) pour fournir une estimation de qualité de transmission correspondant à ladite connexion photonique à estimer, une structure de données (83) comportant une pluralité de caractérisations de chemins-types, une pluralité de caractérisations de changements-types de signaux optiques entre des segments desdits chemins-types, et des paramètres de qualité de transmission associés chacun à une caractérisation de chemin-type et une caractérisation de changement-type, et des moyens de traitement (84) aptes à sélectionner au moins une caractérisation de chemin-type et au moins une caractérisation de changement-type en fonction dudit descriptif de connexion photonique à estimer, à sélectionner dans la structure de données au moins un paramètre de quotité dé transmission associé auxdites caractérisation de chemin-type et caractérisation de changement-type, et à calculer ladite estimation de qualité de transmission en fonction dudit au moins une paramètre de qualité de transmission sélectionné.

8. Dispositif selon la revendication 7, **caractérisé par le fait que** les caractérisations de chemin-type comportent un nombre de noeuds de commutation traversés, une longueur, ou une phase non linéaire cumulée.

9. Dispositif selon l'une des revendications 7 à 8, **caractérisé par le fait que** les caractérisations de changement-type comportent une loi de probabilité de changement par canal voisin par changement de segment.

10. Dispositif selon l'une des revendications 7 à 9, **caractérisé par le fait que** le descriptif de connexion photonique à estimer comporte une séquence d'identifiants d'éléments topologiques du système de transmission photonique traversés par la connexion photonique à estimer.

11. Dispositif selon l'une des revendications 7 à 10, **caractérisé par le fait que** le descriptif de connexion photonique à estimer comporte un taux de changement de signaux optiques voisins par changement de segment (TC), ledit taux de changement caractérisant des changements de signaux optiques voisins d'une longueur d'onde porteuse de la connexion photonique, lesdits signaux voisins étant portés par au moins une longueur d'onde située dans un voisinage de ladite longueur d'onde porteuse.

12. Dispositif selon la revendication 11, **caractérisé par le fait que** le taux de changement est un taux moyen (<TC>) calculé en fonction d'un nombre de segments de la connexion photonique à estimer.

13. Procédé pour réaliser un estimateur de changement des signaux voisins d'une longueur d'onde porteuse dans un système de transmission photonique, ledit procédé comportant les étapes consistant à :

    sélectionner (71) un ensemble de connexions photoniques dans ledit système de transmission photonique, chaque connexion photonique comportant une longueur d'onde porteuse transmise le long d'un chemin comportant plusieurs segments, pour chaque connexion photonique dudit ensemble, à chaque interface entre deux segments successifs du chemin de ladite connexion photonique, dénombrer (72) les signaux optiques voisins de la longueur d'onde porteuse de ladite connexion photonique qui sont modifiés, lesdits signaux voisins étant portés par au moins une longueur d'onde située dans un voisinage de ladite longueur d'onde porteuse, à partir desdits dénombrements, calculer (73) un taux de changement moyen des signaux optiques voisins par interface entre segments, ledit taux de changement étant moyenné sur une pluralité de connexions photoniques dudit ensemble ayant le même nombre d'interfaces entre segments, et stocker (74) lesdits taux de changement moyen en association avec les nombres d'interfaces correspondants dans un dispositif de stockage de données.

14. Procédé pour déterminer un taux de changement de signaux optiques voisins par changement de segment pour une connexion photonique comportant une longueur d'onde porteuse transmise le long d'un chemin comportant plusieurs segments dans un système de transmission photonique, ledit procédé comportant les étapes consistant à :

à chaque interface entre deux segments successifs du chemin de ladite connexion photonique, dénombrer (61) les signaux optiques voisins de la longueur d'onde porteuse de ladite connexion photonique qui sont modifiés, lesdits signaux voisins étant portés par au moins une longueur d'onde située dans un voisinage de ladite longueur d'onde porteuse,

à partir desdits dénombrements, calculer (62) un taux de changement (TC) des signaux optiques voisins par interface, ledit taux de changement étant rapporté à un nombre (M) des interfaces de segments traversées par ledit chemin.

15. Procédé selon la revendication 14, **caractérisé par le fait que** ledit taux de changement est rapporté à un nombre (NV) des canaux de longueurs d'onde situés dans ledit voisinage de la longueur d'onde porteuse.

**Claims**

1. A method for producing a transmission quality estimator for a photonic transmission system (1), said method being **characterized by** the steps consisting of:

a) performing by a propagation model a plurality of propagation calculations reporting on a non-linear interaction between optical signals, said propagation calculations dealing with the transmission of an optical signal (S0) over a carrier wavelength (λ0) along a path comprising a plurality of successive segments (21, 22, 23), each of said propagation calculations comprising the steps consisting of:

defining (36) neighboring signals (S1) which overlap with said optical signal along the segments of said path, said neighboring signals being carried by at least one wavelength (λ1) located within a vicinity of said carrier wavelength, said neighboring signals being defined so as to change according to a predetermined statistical rule between said segments, and

carrying out (37) the propagation calculation of said optical signal with said neighboring signals,

b) calculating (40) a transmission quality parameter of said optical signal, said transmission quality parameter being obtained based on the results of a plurality of said propagation calculations, and

c) storing said transmission quality parameter in association with a characterization of said path and a characterization of said statistical change rule of the neighboring signals within a data storage device.

2. A method according to claim 1, **characterized by** the fact that the change in a neighboring signal between two segments comprises a change in the numeric content of said neighboring signal.

3. A method according to claim 1 or 2, **characterized by** the fact that the numeric content of a neighboring signal comprises a pseudorandom numeric sequence, the change in said neighboring signal between two segments comprising the application of a timeshift to said pseudorandom numeric sequence.

4. A method according to one of the claims 1 to 3, **characterized by** the fact that the characterization of said statistical rule includes a change probability value for each neighboring channel for each segment change (PC).

5. A method according to one of the claims 1 to 4; **characterized by** the fact that the characterization of said path includes at least one parameter chosen within the group consisting of a number of segments of the path, a length of the path, and a total nonlinear phase (PNL) of the path.

6. A method according to one of the claims 1 to 5, **characterized by** the fact that said transmission quality parameter is obtained by averaging the results of the plurality of said propagation calculations.

7. A device (80, 81) for determining a transmission quality estimate within a photonic transmission system, said device being **characterized by** the fact that it comprises:

an input interface (85, 91) for receiving a photonic connection description, said description comprising at least one parameter of a photonic connection to be estimated,

an output interface (86) for providing a transmission quality estimation corresponding to said photonic connection to be estimated,

a data structure (83) comprising a plurality of typical-path characterizations, a plurality of typical-change characterizations of optical signals between said segments of said typical-paths, and transmission quality parameters each associated with a typical-path characterization and a typical-change characterization, and

processing means (84) capable of selecting at least one typical-path characterization and at least one typical-change characterization based on said to-be-estimated photonic connection's description, of selecting within the data structure at least one transmission quality parameter associated with said typical-path characterization and typical-change characterization, and of calculating said transmission quality estimate based on said at least one selected transmission quality parameter.

8. A device according to claim 7, **characterized by** the fact that the typical-path characterizations comprise a number of crossed switching nodes, a length, or a total nonlinear phase.

9. A device according to one of the claims 7 to 8, **characterized by** the fact that the typical-change characterizations comprise a change probability law for each neighboring channel for each segment change.

10. A device according to one of the claims 7 to 9, **characterized by** the fact that the photonic connection description to be estimated comprises a sequence of topological element identifiers of the photonic transmission system crossed by the photonic connection to be estimated.

11. A device according to one of the claims 7 to 10, **characterized by** the fact that the photonic connection description to be estimated comprises a rate of change of neighboring optical signals for each segment change (TC), said rate of change characterizing the changes in neighboring optical signals of the photonic connection's carrier wavelength, said neighboring signals being carried by at least one wavelength located within a vicinity of said carrier wavelength.

12. A device according to claim 11, **characterized by** the fact that the rate of change is an average rate (<TC >) calculated based on a number of segments of the photonic connection to be estimated.

13. A method for creating a change estimator of neighboring signals of a carrier wavelength within a photonic transmission system, said method comprising the steps consisting of:

selecting (71) a set of photonic connections within said photonic transmission system, each photonic connection comprising a carrier wavelength along a path comprising multiple segments, for each photonic connection of said set, to each interface between two successive segments of the path of said photonic connection, counting (72) the neighboring optical signals of the carrier wavelength of said photonic connection which are modified, said neighboring signals being carried by at least one wavelength located within a vicinity of said carrier wavelength, based on said countings, calculating (73) an average rate of change of the neighboring optical signals for each interface between segments, said rate of change being averaged across a plurality of photonic connections of said set having the same number of interfaces between segments, and storing (74) said average rates of change in association with the corresponding interface numbers within a data storage device.

14. A method for determining a rate of change of neighboring optical signals for each segment change for a photonic connection comprising a carrier wavelength transmitted along a path comprising multiple segments within a photonic transmission system, said method comprising the steps consisting of:

at each interface between two successive segments of said photonic connection's path, counting (61) the neighboring optical signals of the carrier wavelength which are modified, said neighboring signals being carried by at least one wavelength located within a vicinity of said carrier wavelength,
based on said countings, calculating (62) a rate of change (TC) of the neighboring optical signals for each interface, said rate of change being related to a number (M) of segment interfaces crossed by said path.

15. A method according to claim 14, **characterized by** the fact that said rate of change is related to a number (NV) of wavelength channels located within said vicinity of the carrier wavelength.

**Patentansprüche**

1. Verfahren zur Herstellung eines Übertragungsqualitätsschätzers für ein photonisches Übertragungssystem (1), wobei das besagte Verfahren durch die folgenden Schritte gekennzeichnet ist:

a) Ausführen einer Mehrzahl von Ausbreitungsberechnungen anhand eines Ausbreitungsmodells, welches eine nichtlineare Wechselwirkung zwischen optischen Signalen einbezieht, wobei sich die besagten Ausbreitungsberechnungen auf die Übertragung eines optischen Signals (S0) auf einer Trägerwellenlänge ($\lambda 0$) entlang eines Pfades mit einer Mehrzahl von aufeinanderfolgenden Segmenten (21, 22, 23) beziehen, wobei eine jede der besagten Ausbreitungsberechnungen die folgenden Schritte umfasst:

Definieren (36) der benachbarten Signale (S1), welche dem besagten optischen Signal entlang der Segmente des besagten Pfades überlagert sind, wobei die besagten benachbarten Signale von mindestens einer Wellenlänge ($\lambda$1), welche sich in einer Nachbarschaft der besagten Trägerwellenlänge befindet, getragen wird, wobei die besagten benachbarten Signale so definiert sind, dass sie sich gemäß einer vorgegebenen statistischen Regel zwischen den besagten Segmenten ändern, und Ausführen (37) der Ausbreitungsberechnung des besagten optischen Signals mit den besagten benachbarten Signalen,

b) Berechnen (40) eines Übertragungsqualitätsparameters des besagten optischen Signals, wobei der besagte Übertragungsqualitätsparameter auf der Basis einer Mehrzahl der besagten Ausbreitungsberechnungen erhalten wird, und
c) Speichern des besagten Übertragungsqualitätsparameters zusammen mit einer Kennzeichnung des besagten Pfades und einer Kennzeichnung der besagten statistischen Regel der Änderung der benachbarten Signale in einer Datenspeichereinrichtung.

2. Verfahren nach Anspruch 1, **dadurch gekennzeichnet, dass** die Änderung eines benachbarten Signals zwischen zwei Segmenten eine Änderung des digitalen Inhalts des besagten benachbarten Signals umfasst.

3. Verfahren nach Anspruch 1 oder 2, **dadurch gekennzeichnet, dass** der digitale Inhalt eines benachbarten Signals eine pseudozufällige digitale Sequenz aufweist, wobei die Änderung des besagten benachbarten Signals zwischen zwei Segmenten das Anwenden eines Zeitversatzes auf die besagte pseudozufällige digitale Sequenz umfasst.

4. Verfahren nach einem der Ansprüche 1 bis 3, **dadurch gekennzeichnet, dass** die Kennzeichnung der besagten statistischen Regel einen Wert der Änderungswahrscheinlichkeit pro benachbarten Kanal durch Änderung des Segmentes (PC) umfasst.

5. Verfahren nach einem der Ansprüche 1 bis 4, **dadurch gekennzeichnet, dass** die Kennzeichnung des besagten Pfades mindestens einen in der Gruppe bestehend aus einer Anzahl von Pfadsegmenten, einer Pfadlänge und einer kumulierten nichtlinearen Phase des Pfades (PNL) gewählt wird.

6. Verfahren nach einem der Ansprüche 1 bis 5, **dadurch gekennzeichnet, dass** der besagte Übertragungsqualitätsparameter anhand der Ergebnisse der Mehrzahl der besagten Ausbreitungsberechnungen erhalten wird.

7. Vorrichtung (80, 81) zum Ermitteln einer Übertragungsqualitätsschätzung in einem photonischen Übertragungssystem, wobei die besagte Vorrichtung **dadurch gekennzeichnet ist, dass** sie umfasst:

Eine Eingangsschnittstelle (85, 91) zum Empfangen einer Beschreibung einer photonischen Verbindung, wobei die besagte Beschreibung mindestens einen Parameter einer zu schätzenden photonischen Verbindung umfasst,
eine Ausgangsschnittstelle (86) zum Bereitstellen einer Übertragungsqualitätsschätzung, welche der besagten zu schätzenden photonischen Verbindung entspricht,
eine Datenstruktur (83) mit einer Mehrzahl von Kennzeichnungen von typischen Pfaden, einer Mehrzahl von Kennzeichnungen von typischen Änderungen von optischen Signalen zwischen den Segmenten der besagten typischen Pfade, sowie Übertragungsqualitätsparametern, welche jeweils einer Kennzeichnung eines typischen Pfades und einer Kennzeichnung einer typischen Änderung zugeordnet sind, und
Verarbeitungsmittel (84), welche dazu ausgelegt sind, mindestens eine Kennzeichnung eines typischen Pfades und mindestens eine Kennzeichnung einer typischen Änderung gemäß der besagten Beschreibung der zu schätzenden photonischen Verbindung auszuwählen, in der Datenstruktur mindestens einen den besagten Kennzeichnungen eines typischen Pfades und den besagten Kennzeichnungen einer typischen Änderung zugeordneten Übertragungsqualitätsparameter auszuwählen und die besagte Übertragungsqualitätsschätzung gemäß dem besagten mindestens einen ausgewählten Übertragungsqualitätsparameter zu berechnen.

8. Vorrichtung nach Anspruch 7, **dadurch gekennzeichnet, dass** die Kennzeichnungen von typischen Pfaden eine Anzahl von durchquerten Schaltknoten, eine Länge oder eine kumulierte nichtlineare Phase umfassen.

9. Vorrichtung nach einem der Ansprüche 7 bis 8, **dadurch gekennzeichnet, dass** die Kennzeichnungen von typischen Änderungen ein Änderungswahrscheinlichkeitsgesetz pro benachbarten Kanal durch Änderung des Segmentes enthalten.

**10.** Vorrichtung nach einem der Ansprüche 7 bis 9, **dadurch gekennzeichnet, dass** die Beschreibung der zu schätzenden photonischen Verbindung eine Sequenz von Kennungen von topologischen Elementen des photonischen Übertragungssystems, welche von der zu schätzenden photonischen Verbindung durchquert werden, umfasst.

**11.** Vorrichtung nach einem der Ansprüche 7 bis 10, **dadurch gekennzeichnet, dass** die Beschreibung der zu schätzenden photonischen Verbindung eine Änderungsrate von benachbarten optischen Signalen durch Änderung des Segmentes (TC) umfasst, wobei die besagte Änderungsrate die Änderungen von benachbarten optischen Signalen einer Trägerwellenlänge der photonischen Verbindung kennzeichnet, wobei die besagten benachbarten Signale von mindestens einer in einer Nachbarschaft der besagten Trägerwellenlänge liegenden Wellenlänge getragen werden.

**12.** Vorrichtung nach Anspruch 11, **dadurch gekennzeichnet, dass** die Änderungsrate eine gemäß einer Anzahl von Segmenten der zu schätzenden photonischen Verbindung errechnete Durchschnittsrate (<TC >) ist.

**13.** Verfahren zur Herstellung eines Schätzers der Änderung der benachbarten Signale einer Trägerwellenlänge in einem photonischen Übertragungssystem, wobei das Verfahren die folgenden Schritte umfasst:

Auswählen (71) einer Gruppe von photonischen Verbindungen in dem besagten photonischen Übertragungssystem, wobei jede photonische Verbindung eine Trägerwellenlänge umfasst, welche entlang eines Pfades mit mehreren Segmenten übertragen wird,

für jede photonische Verbindung der besagten Gruppe, an jeder Schnittstelle zwischen zwei aufeinanderfolgenden Segmenten des Pfades der besagten photonischen Verbindung, Zählen (72) der benachbarten optischen Signale der Trägerwellenlänge der besagten photonischen Verbindung, welche geändert wurden, wobei die besagten benachbarten Signale von mindestens einer in einer Nachbarschaft der besagten Trägerwellenlänge liegenden Wellenlänge getragen werden,

ausgehend von den besagten Zählungen, Errechnen (73) einer durchschnittlichen Änderungsrate der benachbarten optischen Signale pro Schnittstelle zwischen den Segmenten, wobei die besagte Änderungsrate über eine Mehrzahl von photonischen Verbindungen der besagten Gruppe, welche eine gleiche Anzahl von Schnittstellen zwischen den Segmenten aufweisen, gemittelt wird, und

Speichern (74) der besagten durchschnittlichen Änderungsrate zusammen mit den entsprechenden Anzahlen von Schnittstellen in einer Datenspeichereinrichtung.

**14.** Verfahren zur Bestimmung einer Änderungsrate von benachbarten optischen Signalen durch Änderung des Segmentes für eine photonische Verbindung mit einer Trägerwellenlänge, welche entlang eines Pfades mit mehreren Segmenten in einem photonischen Übertragungssystem übertragen wird, wobei das Verfahren die folgenden Schritte umfasst:

An jeder Schnittstelle zwischen zwei aufeinanderfolgenden Segmenten des Pfades der besagten photonischen Verbindung, Zählen (61) der benachbarten optischen Signale der Trägerwellenlänge der besagten photonischen Verbindung, die geändert wurden, wobei die besagten benachbarten Signale von mindestens einer in einer Nachbarschaft der besagten Trägerwellenlänge befindlichen Wellenlänge getragen werden,

ausgehend von den besagten Zählungen, Errechnen (62) einer Änderungsrate (TC) der benachbarten optischen Signale pro Schnittstelle, wobei die besagte Änderungsrate zu einer Anzahl (M) der von dem besagten Pfad durchquerten Schnittstellen der Segmente in Beziehung steht.

**15.** Verfahren nach Anspruch 14, **dadurch gekennzeichnet, dass** die besagte Änderungsrate zu einer Anzahl (NV) der in der besagten Nachbarschaft der Trägerwellenlänge liegenden Wellenlängenkanäle in Beziehung steht.

## FIG_1

## FIG_2

## FIG_3

## FIG_4

## FIG_5

```
                    ┌──────────────────┐
                    │                  │──35
                    └──────────────────┘
                            │
        n ← n+1   ┌──────────────────┐
          ┌──────▶│                  │──36
          │       └──────────────────┘
          │               │
     39 ──┤       ┌──────────────────┐
          │       │                  │──37
          │       └──────────────────┘
          │               │
          │       ┌──────────────────┐
          └───────│     OSNR(n)       │──38
                  └──────────────────┘
                          │
          ┌─────────────────────────────┐
          │  OSNR = 1/N  Σ OSNR(n)       │──40
          │              n=1             │
          └─────────────────────────────┘
```

$$OSNR = \frac{1}{N} \sum_{n=1}^{N} OSNR(n)$$

## FIG_6

18

## FIG_7

## FIG_8

## FIG_9

60

61     $n_{ij}$     i, j

62     $TC = \dfrac{1}{M} \cdot \dfrac{1}{NV} \cdot \sum_{ij} n_{ij}$

## FIG_10

70     M

71

72     TC

73     <TC>

74     <TC>, M

75

# FIG_11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0874477 A
- US 2003115028 A

**Littérature non-brevet citée dans la description**

- **E.B. BASCH et al.** Architectural Tradeoffs for Reconfigurable Dense Wavelength-Division Multiplexing Systems. *JSTQE,* 2006, vol. 12 (4
- Non-linear Routing impairments in Wavelength Switched Optical networks. *IETF,* Novembre 2001